# EUROPÄISCHE PATENTSCHRIFT

(11) **EP 0 661 899 B1**
(45) Veröffentlichungstag und Bekanntmachung des Hinweises auf die Patenterteilung: **02.05.2002**
(21) Anmeldenummer: 94119410.2
(22) Anmeldetag: 07.12.1994
(51) Int. Cl.: H04Q 11/04, H04L 12/56

(54) **Verfahren zum Verwalten der vermittlungstechnischen Ressourcen in im Asynchron-Transfer-Modus wirkenden Kommunikationssystemen**
Method for the allocation of the switching resources in communication systems according to the asynchronous-transfer-mode
Procédé d'allocation de ressources de commutation dans des réseaux de communication selon le mode ATM (mode de transfert asynchrone)

(30) Priorität: 22.12.1993 DE 4343991
(43) Veröffentlichungstag der Anmeldung: 05.07.1995
(73) Patentinhaber: SIEMENS AKTIENGESELLSCHAFT, 80333 München (DE)
(72) Erfinder: Hünlich, Klaus, Dipl.-Phys., D-85467 Neuching (DE)

(56) Entgegenhaltungen:
- ELECTRONICS LETTERS, Bd. 26, Nr. 22, Oktober 1990, STEVENAGE GB, Seiten 1860-1861, XP000171239 M. ILYAS : "Resource allocation in broadband ISDNs"
- ELECTRONICS LETTERS, Bd. 27, Nr. 21, November 1991, STEVENAGE GB, Seiten 2202-2204, XP000273668 D. KIM ET AL.: "Bandwidth allocation strategy with state-dependent bernouilli access and pre-emptive priority "
- ELECTRICAL COMMUNICATION, Bd. 64, Nr. 2/3, 1990, BRUSSELS BE, Seiten 132-138, XP000237642 L. BERMEJO ET AL.: "Service Characteristics and Traffic Models in a Broadband ISDN"
- SUPERCOMM/ICC '92 , Bd. 3, 1992, CHICAGO, 92, Seiten 1392-1396, XP000337938 M. HUANG ET AL.: "Nondistributed Multiparty Connection Establishment For Broadband Networks"
- IEEE INFOCOM '92 THE CONFERENCE ON COMPUTER COMMUNICATIONS, Bd. 1, 1992, FLORENCE, IT, Seiten 21-29, XP000300042 C. LEA ET AL.: "Bandwidth Quantization in the Broadband ISDN"

## Beschreibung

Die Erfindung betrifft ein Verfahren zum Verwalten der vermittlungstechnischen Ressourcen in im Asychron-Transfer-Modus wirkenden Kommunikationssystemen mit angeschlossenen Kommunikationsendeinrichtungen, bei dem virtuelle Verbindungen signalisierungs- oder administrationsgesteuert aufgebaut werden, wobei der Umfang der vermittlungstechnischen Ressourcen für die jeweiligen virtuellen Verbindungen den betroffenen Kommunikationssystemen angezeigt wird.

In im Asychron-Transfer-Modus wirkende Kommunikationssysteme sind aus der Druckschrift von Siemens, " ATM-Technologie für zukünftige Breitbandnetze", 1992 bekannt. Bei derartigen Kommunikationssystemen, insbesondere in Vermittlungseinrichtungen oder vermittlungstechnischen Vorfeldeinrichtungen, werden zu übermittelnde digitale Informationen durch Informationspakete fester Länge übermittelt, die in der Fachwelt als Zellen definiert sind. Die Zellen umfassen 48 Oktetts für die zu übermittelnde digitale Nutzinformation und 5 Oktetts für einen Zellkopf, in dem die vermittlungstechnischen Informationen für eine virtuelle Verbindung in einem Kommunikationsnetz eingefügt sind. Die Zellen werden überwiegend in an das Kommunikationssystem angeschlossenen Kommunikationsendeinrichtungen gebildet und an das Kommunikationssystem übermittelt.

Vor der Übermittlung der Zellen wird mit Hilfe von Verbindungsaufbaupaketen eine virtuelle Verbindung, d.h. eine logische Verbindung zwischen einem sendenden und einem empfangenden Kommunikationsendgerät aufgebaut. Dieser Verbindungsaufbau kann durch das Kommunikationsendgerät im Rahmen einer Verbindungssignalisierung oder administrativ, d.h. durch eine durch die Administration des Netzbetreibers eingerichtete virtuelle Verbindung erfolgen.'Beim Aufbau einer virtuellen Verbindung wird den betroffenen Kommunikationssystemen, d.h. den Kommunikationssystemen, die zwischen einem sendenden und einem empfangenden Kommunikationsgerät eingefügt sind, der Umfang der vermittlungstechnischen Ressourcen angezeigt, der für die jeweilige virtuelle Verbindung durch ein Kommunikationsendgerät angefordert wurde. Bekannterweise wird dieser angezeigte Umfang der vermittlungstechnischen Ressourcen für die jeweilige virtuelle Verbindung reserviert. Ein Beispiel eines solchen Systems und Verfahrens ist aus dem Dokument: Electronics Letters, Bd. 26, Nr 22, Oktober 1990, Steuenage GB, Seiten 1860-1861, ILYAS: "Resource Allocation in Broadband ISDNS" bekannt. Dieses Dokument wird als nächstliegender Stand der Technik angesehen.

Des weiteren ist es bekannt, die Zellen verschiedener Informationspakete im Kommunikationssystem mit Hilfe eines Zeitmultiplex- oder statistischen Multiplexverfahrens zu konzentrieren. Dieses Multiplexen wird mit Hilfe von Multiplex-Identifizierern gesteuert, wobei mit Hilfe dieser Multiplex-Identifizierer das Zusammensetzen der einzelnen Zellen in die vorhergehende Reihenfolge bewirkt wird. Bei höheren Verkehrsbelastungen treten beim statistischen Multiplexen undefinierte Zellenverluste auf. Des weiteren werden sowohl bei gemultiplexten als auch bei nicht gemultiplexten virtuellen Verbindungen in Übermittlungspausen zwischen Informationspaketen die reservierten, vermittlungstechnischen Ressourcen nicht genutzt.

Die der Erfindung zugrundeliegende Aufgabe besteht darin, die in den Kommunikationssystemen verfügbaren, vermittlungstechnischen Ressourcen für virtuelle Verbindungen effizienter zu nutzen. Die Aufgabe wird ausgehend von einem Kommunikationssystem gemäß den Merkmalen des Oberbegriffs des Patentanspruchs 1 durch dessen kennzeichnende Merkmale gelöst.

Der wesentliche Aspekt des erfindungsgemäßen Verfahrens ist darin zu sehen, daß in jede erste bzw. letzte Zelle jedes durch mehrere Zellen zu vermittelnden Informationspaketes einer virtuellen Verbindung eine Zellenstart- bzw. eine Zellenendeinformation eingefügt wird und daß für jede virtuelle Verbindung jeweils ein Paketzähler und ein Sendezähler temporär zugeordnet wird und mit Hilfe der Zellenstart- bzw. Zellenendeinformation und des Sende- sowie Paketzählers Übermittlungspausen erkannt und während dieser erkannten Übermittlungspausen die hierfür vorgesehenen vermittlungstechnischen Ressourcen anderweitig genutzt werden können, z.B. für weitere virtuelle Verbindungen. Des weiteren wird insbesondere bei Überlastsituationen der Kommunikationssysteme ein Übermitteln von Zellen vermieden, deren Verlustwahrscheinlichkeit sehr hoch ist, da Zellen, für die keine vermittlungstechnischen Ressourcen zur Verfügung stehen, nicht übermittelbar sind. Letztlich führt auch diese Verminderung der Zellenverluste zu einer effizienteren Nutzung der vermittlungstechnischen Ressourcen für virtuelle Verbindungen.

Gemäß einer vorteilhaften Ausgestaltung des erfindungsgemäßen Verfahrens wird in den Kommunikationssystemen nach jedem Erkennen einer Zellenstart- bzw. einer Zellenendeinformation, ausgehend von einem vorgegebenen Zählerstand 0, der Zählerstand des Paketzählers inkrementiert bzw. dekrementiert sowie nach jedem Erkennen einer Zellenstartinformation, ausgehend von einem vorgegebenen Zählerstand 0, der Zählerstand des Sendezählers inkrementiert, sofern die angezeigten vermittlungstechnischen Ressourcen für die aktuelle Vermittlung des jeweiligen Informationspaketes zuteilbar sind. Des weiteren wird nach jedem Erkennen einer Zellenendeinformation der Zählerstand des zugeordneten Sendezählers dekrementiert, sofern die Zählerstände des Paket- und Sendezählers übereinstimmen. Der für die jeweilige virtuelle Verbindung angezeigte Umfang der vermittlungstechnischen Ressourcen wird zugeteilt, sofern der Sendezählerstand des Sendezählers über dem Zählerstand 0 liegt und freigegeben, sofern der Sendezähler wieder den Zählerstand 0 erreicht. Bei dieser Inkrementierung und Dekrementierung von Zählerständen ist eine einfache, sowohl programmtechnische als auch schaltungstechnische Realisierung durch Zähler möglich.

Vorteilhaft werden die Zellenstart- und Zellenendeinformation in den Zellkopf einer Zelle eingefügt - Anspruch 3. Durch diese Einfügung in den Zellkopf können die vorhandenen vermittlungstechnischen Programme hinsichtlich der Auswertung des Zählkopfes mitbenutzt und müssen lediglich um eine Auswertung bezüglich einer Zellenstart- und -endeinformation mit Hilfe von Zählern ergänzt werden.

Das erfindungsgemäße Verfahren ist besonders vorteilhaft für virtuelle Verbindungen vorgesehen, bei denen die Zellen der Informationspakete statistisch gemultiplext übermittelt werden - Anspruch 4. Bei der statistischen Multiplexung der Zellen wird neben der effektiveren Nutzung der vermittlungstechnischen Ressourcen für virtuelle Verbindungen eine Verminderung der Zellenverluste in Überlastsituationen des Kommunikationssystems erreicht.

In einer Anordnung zum Verwalten der vermittlungstechnischen Ressourcen nach dem erfindungsgemäßen Verfahren sind jeweils in den Anschlußmodulen der Kommunikationssysteme die Zellköpfe auswertende Auswertemittel und inkrementierbare und dekrementierbare Zähler sowie Steuermittel vorgesehen und derart ausgestaltet, daß das erfindungsgemäße Verfahren durchgeführt werden kann - Anspruch 5.

Im folgenden wird das erfindungsgemäße Verfahren anhand dreier zeichnerischer Darstellungen näher erläutert. Dabei zeigen:
- Figur 1: in einem Blockschaltbild ein Kommunikationssystem zur Durchführung des erfindungsgemäßen Verfahrens,
- Figur 2: die Struktur einer Zelle und
- Figur 3: in einem Ablaufdiagramm die erfindungsrelevanten Bereiche der Auswerteroutine.

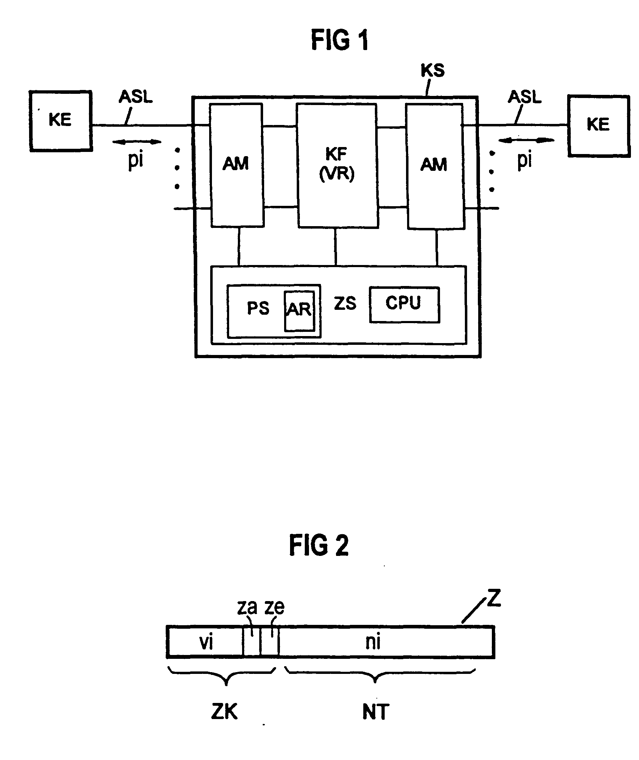

Figur 1 zeigt ein Kommunikationssystem KS, an das über Anschlußleitungen ASL mehrere Kommunikationsendgeräte KE angeschlossen sind. Das Kommunikationssystem KS weist für je eine Gruppe von Kommunikationsendgeräten KE jeweils ein Anschlußmodul AM auf, mit dessen Hilfe insbesondere die physikalische Anpassung der Eigenschaften der Anschlußleitungen ASL an die kommunikationssysteminternen physikalischen Bedingungen erfolgt sowie die Signalisierungsinformationen ein- bzw. ausgefügt werden. Die Signalisierungs- und Nachrichteninformationen werden zwischen den Kommunikationsendgeräten KE durch aus einzelnen Zellen Z gebildete Informationspakete pi übermittelt. Die derart gebildeten Zellen Z werden gemäß dem standardisierten Asynchron-Transfer-Modus (ATM) gebildet und in den Kommunikationsystemen KS vermittelt. Hierzu ist im Kommunikationssystem KS ein im Asynchron-Transfer-Modus wirkendes Koppelfeld KF angeordnet, das sowohl mit den Anschlußmodulen AM als auch mit einer zentralen Steuerung ZS verbunden ist. Mit Hilfe der zentralen Steuerung ZS werden die vermittlungstechnischen Einstellungen des Koppelfeldes KF bewirkt, sowie die Anschlußmodule AM gesteuert bzw. überwacht. In einem Programmspeicher PS der zentralen Steuerung ZS ist eine das erfindungsgemäße Verfahren realisierende Auswerteroutine AR gespeichert. Diese Auswerteroutine ist Teil des vermittlungstechnischen Programmes des Kommunikationssystems KS und ist insbesondere für die Auswertung der in den Zellköpfen ZK-der Zellen Z übermittelten vermittlungstechnischen Informationen vorgesehen.

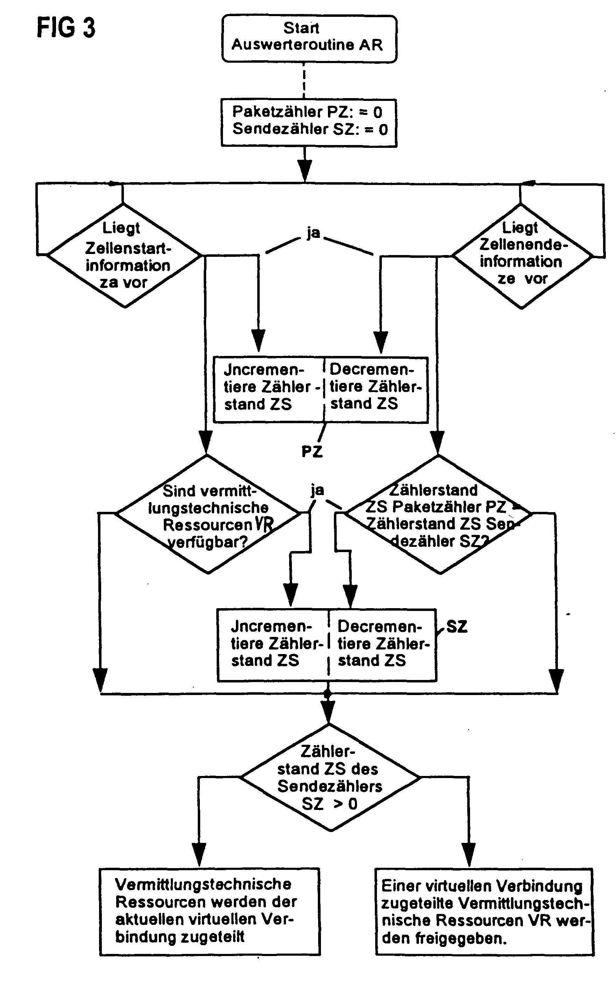

Die vermittlungstechnischen Ressourcen VR eines Kommunikationssystems KS stellen die Vermittlungskapazität des Koppelfeldes KF dar. Während eines Verbindungsaufbaus einer virtuellen Verbindung, d.h. einer logischen nicht ausschließlich zwischen zwei Kommunikationsendgeräten KE reservierten physikalischen Verbindung, wird der gewünschte Umfang der vermittlungstechnischen Ressourcen VR, z.B. 64 kBit/s, den Kommunikationssystemen KS bzw. deren zentralen Steuerungen ZS angezeigt, die zwischen den den Verbindungsaufbau betreffenden Kommunikationsendgeräten KE eingefügt sind. Bekannterweise wird der angeforderte Umfang der vermittlungstechnischen Ressourcen VR anschließend der jeweiligen virtuellen Verbindung zugeteilt. Beim erfindungsgemäßen Verfahren jedoch wird diese Zuteilung der vermittlungstechnischen Ressourcen VR mit Hilfe zweier beispielsweise programmtechnisch realisierten Zähler, einem Paketzähler PZ und einem Sendezähler SZ, zusätzlich gesteuert. Diese Steuerung, d.h. das Zuteilen und Freigeben der jeweiligen vermittlungstechnischen Ressourcen VR ist in Figur 3 anhand eines sich selbst erläuternden Ablaufdiagrammes dargestellt. Der in Figur 3 gezeigte Ablauf stellt Teil der in Figur 1 dargestellten Auswerteroutine AR dar. Die beiden Zähler PZ,SZ - Sendezähler SZ und Paketzähler PZ - und ebenso der dargestellte Teil der Auswerteroutine AR sind schaltungstechnisch oder programmtechnisch realisierbar, wobei bei hohen Übermittlungs- bzw. Vermittlungsgeschwindigkeiten eine schaltungstechnische Realisierung vorteilhafter ist. Hierbei sind für die Zähler PZ, SZ sowie für die Vergleichsfunktionen integrierte Schaltkreise, z.B. incrementierende und decrementierende Zähler und mehrstellige Vergleicherbausteine, in der Art zusammenzuschalten, daß die in FIG 3 angegebenen, erfindungsgemäßen Funktionen ablaufen. Mit Hilfe des Paketzählers PZ und insbesondere des zusätzlichen Sendezählers SZ können Übermittlungspausen bzw. Sendepausen bei der Übermittlung der Informationspakete pi festgestellt und die in diesen Pausen zugeteilten vermittlungstechnischen Ressourcen VR für eine weitere Benutzung, z.B. für weitere virtuelle Verbindungen, freigegeben werden. Durch das erfindungsgemäße Verfahren wird foglich eine erheblich effizientere Nutzung der vermittlungstechnischen Ressourcen VR der Kommunikationssysteme KS erreicht.

Der prinzipielle Aufbau einer Zelle Z ist in Figur 2 dargestellt. Die Zelle Z enthält einen Zellkopf ZK, in die vermittlungstechnische Informationen vi eingefügt sind. Bei diesen vermittlungstechnischen Informationen vi handelt es sich um eine virtuelle Wege- und virtuelle Kanalinformation, mit deren Hilfe die zugehörige Zelle Z durch ein im Asynchron-Transfer-Modus wirkendes Kommunikationsnetz übermittelt wird. Erfindungsgemäß ist in diesen Zellkopf eine Zellenstart- bzw. Zellenendeinformation za, ze eingefügt. Eine Zellenstartinformation za wird in die erste zu übermittelnde Zelle Z eines Informationspaketes pi eingefügt. Analog hierzu wird in die letzte zu übermittelnde Zelle Z des jeweiligen Informationspaketes pi eine Zellenendeinformation ze eingefügt. Die Zellenstart- bzw. Zellenendeinformation za, ze ist prinzipiell auch in den Nachrichtenteil NT einer Zelle Z einfügbar, jedoch ist hierfür eine spezielle Auswerteroutine für den nachrichtentechnischen Teil NT in der zentralen Steuerung ZS des jeweiligen Kommunikationssystems KS zu implementieren.

## Patentansprüche

1. Verfahren zum Verwalten der vermittlungstechnischen Ressourcen (VR) in im Asychron-Transfer-Modus wirkenden Kommunikationssystemen (KS) mit angeschlossenen Kommunikationsendeinrichtungen (KE), bei dem virtuelle Verbindungen signalisierungs- oder administrationsgesteuert aufgebaut werden, wobei der Umfang der vermittlungstechnischen Ressourcen (VR) für die jeweiligen virtuellen Verbindungen den betroffenen Kommunikationssystemen (KS) angezeigt wird,
**dadurch gekennzeichnet,**
- **daß** in jede erste bzw. letzte Zelle (Z) jedes durch mehrere Zellen (Z) zu vermittelnden Informationspaketes (pi) einer virtuelle Verbindung eine Zellenstart- bzw. eine Zellenendeinformation (za,ze) eingefügt wird,
- **daß** jeder virtuellen Verbindung jeweils ein Paketzähler (PZ) und Sendezähler (SZ) temporär zugeordnet wird,
- **daß** in den Kommunikationssystemen (KS)
. nach jedem Erkennen einer Zellenstart- bzw. einer Zellenendeinformation (za,ze),ausgehend vom einem vorgegebenen Zählerstand (ZS), der Zählerstand (ZS) des Paketzählers (Z) in eine Zählrichtung bzw. in eine inverse Zählrichtung geändert wird,
. nach jedem Erkennen einer Zellenstartinformation (za), ausgehend von einem vorgegeben Zählerstand (ZS), der-Zählerstand (ZS) des Sendezählers (SZ) in eine Zählrichtung geändert wird, sofern die angezeigten vermittlungstechnischen Ressourcen (VR) für die aktuelle Vermittlung des jeweiligen Informationspaketes (pi) zuteilbar sind,
. nach jedem Erkennen einer Zellenendeninformation (ze) der Zählerstand (ZS) des zugeordneten Sendezählers (SZ) in eine inverse Zählrichtung geändert wird, sofern die Zählerstände (ZS) des Paket- und Sendezählers (PZ,SZ) übereinstimmen, und
- daß der dem jeweiligen Kommunikationsystem (KS) für die jeweilige virtuelle Verbindung angezeigte Umfang der vermittlungstechnischen Ressourcen (VR) zugeteilt wird, sofern der Zählerstand (ZS) des Sendezählers (SZ) von seinem vorgegebenem Zählerstand (ZS) abweicht, und freigegeben wird, sofern der Sendezähler (SZ) wieder seinen vorgegebenen Zählerstand (ZS) aufweist.

2. Verfahren nach Anspruch 1,
**dadurch gekennzeichnet,**
- **daß** in den Kommunikationssystemen (KS)
. nach jedem Erkennen einer Zellenstart- bzw. einer Zellenendeinformation (za,ze),ausgehend vom einem vorgegebenen Zählerstand (ZS) 0, der Zählerstand (ZS) des Paketzählers (Z) incrementiert bzw. decrementiert wird,
. nach jedem Erkennen einer Zellenstartinformation (za), ausgehend von einem vorgegeben Zählerstand (ZS) 0, der Zählerstand (ZS) des Sendezählers (SZ) incrementiert wird, sofern die angezeigten vermittlungstechnischen Ressourcen (VR) für die aktuelle Vermittlung des jeweiligen Informationspaketes (pi)zuteilbar sind,
. nach jedem Erkennen einer Zellenendeninformation (ze) der Zählerstand (ZS) des zugeordneten Sendezählers (SZ) decrementiert wird, sofern die Zählerstände (ZS) des Paket- und Sendezählers (PZ,SZ) übereinstimmen, und
- daß der dem jeweiligen Kommunikationsystem (KS) für die jeweilige virtuelle Verbindung angezeigte Umfang der vermittlungstechnischen Ressourcen (VR) zugeteilt wird, sofern der Zählerstand (ZS) des Sendezählers (SZ) über dem Zählerstand (ZS) 0 liegt, und freigegeben wird, sofern der Sendezähler (SZ) wieder den Zählerstand (ZS) 0 aufweist.

3. Verfahren nach Anspruch 1 oder 2,
**dadurch gekennzeichnet,**
**daß** eine Zelle (Z) durch einen Zellkopf (ZK) und einen Informationsteil (NT) gebildet ist, und daß die Zellenstart- und Zellenendeinformation (za,ze) in den Zellkopf (ZK) eingefügt werden.

4. Verfahren nach einem der Ansprüche 1 bis 3,
**dadurch gekennzeichnet,**
**daß** die Zellen (Z) der Informationspakete (pi) der virtuellen Verbindungen statistisch gemultiplext übermittelt werden.

5. Anordnung zum Verwalten der vermittlungstechnischen Ressourcen (VR) in im Asychron-Transfer-Modus wirkenden Kommunikationssystemen (KS) mit angeschlossenen Kommunikationsendeinrichtungen (KE), bei dem virtuelle Verbindungen signalisierungs- oder administrationsgesteuert aufgebaut werden, wobei der Umfang der vermittlungstechnischen Ressourcen (VR) für die jeweiligen virtuellen Verbindungen den betroffenen Kommunikationssystemen (KS) angezeigt wird,
**dadurch gekennzeichnet,**
**daß** jeweils in Anschlußmodulen (AM) der Kommunikationssysteme (KS) eine die Zellköpfe (ZK) auswertende Auswerteroutine (AR) und inkrementierbare und dekrementierbare Zähler (SZ,PZ) sowie Steuermittel (ZS) vorgesehen und derart ausgestaltet sind, daß
. nach jedem Erkennen einer Zellenstart- bzw. einer Zellenendeinformation (za,ze),ausgehend vom einem vorgegebenen Zählerstand (ZS), der Zählerstand (ZS) des Paketzählers (Z) in eine Zählrichtung bzw. in eine inverse Zählrichtung geändert wird,
. nach jedem Erkennen einer Zellenstartinformation (za), ausgehend von einem vorgegeben Zählerstand (ZS), der Zählerstand (ZS) des Sendezählers (SZ) in eine Zählrichtung geändert wird, sofern die angezeigten vermittlungstechnischen Ressourcen (VR) für die aktuelle Vermittlung des jeweiligen Informationspaketes (pi) zuteilbar sind,
. nach jedem Erkennen einer Zellenendeninformation (ze) der Zählerstand (ZS) des zugeordneten Sendezählers (SZ) in eine inverse Zählrichtung geändert wird, sofern die Zählerstände (ZS) des Paket- und Sendezählers (PZ,SZ) übereinstimmen, und
- **daß** der dem jeweiligen Kommunikationsystem (KS) für die jeweilige virtuelle Verbindung angezeigte Umfang der vermittlungstechnischen Ressourcen (VR) zugeteilt wird, sofern der Zählerstand (ZS) des Sendezählers (SZ) von seinem vorgegebenem Zählerstand (ZS) abweicht, und freigegeben wird, sofern der Sendezähler (SZ) wieder seinen vorgegebenen Zählerstand (ZS) aufweist.

## Claims

1. Method for administering switching resources (VR) in communications systems (KS) which operate using the asynchronous transfer mode and have connected communications terminals (KE), in which virtual connections are set up under signalling or administration control, with the scope of the switching resources (VR) for the respective virtual connections being indicated to the relevant communications systems (KS),
**characterized,**
- **in that** cell start information and cell end information (za, ze), respectively, is inserted into each first and last cell (Z) of each information packet (pi) to be transmitted through a number of cells (Z) using a virtual connection,
- **in that** each virtual connection is temporarily allocated a respective packet counter (PZ) and transmission counter (SZ),
- **in that**, in the communications systems (KS),
• after each identification of cell start information or cell end information (za, ze), starting from a predetermined count (ZS), the count (ZS) of the packet counter (Z) is changed in one counting direction or, respectively, in an inverse counting direction,
• after each identification of cell start information (za), starting from a predetermined count (ZS), the count (ZS) of the transmission counter (SZ) is changed in one counting direction, provided the indicated switching resources (VR) can be allocated for that particular transmission of the respective information packet (pi),
• after each identification of cell end information (ze) the count (ZS) of the associated transmission counter (SZ) is changed in an inverse counting direction, provided the counts (ZS) of the packet and transmission counters (PZ, SZ) match, and
- in that the scope of the switching resources (VR) which is indicated to the respective communications system (KS) for the respective virtual connection is allocated, provided the count (ZS) of the transmission counter (SZ) differs from its previous count (ZS) and is released if the transmission counter (SZ) once again has its predetermined count (ZS).

2. Method according to Claim 1,
**characterized,**
- **in that** the communications systems (KS)
• after each identification of cell start information or cell end information (za, ze), respectively, starting from a predetermined count (ZS) 0, the count (ZS) of the packet counter (Z) is respectively incremented or decremented,
• after each identification of cell start information (za), starting from a predetermined count (ZS) 0, the count (ZS) of the transmission counter (SZ) is incremented, provided the indicated switching resources (VR) can be allocated for that particular transmission of the respective information packet (pi),
• after each identification of cell end information (ze), the count (ZS) of the associated transmission counter (SZ) is decremented provided the counts (ZS) of the packet and transmission counters (PZ, SZ) match, and
- in that the scope of the switching resources (VR) which is indicated to the respective communications system (KS) for the respective virtual connection is allocated provided the count (ZS) of the transmission counter (SZ) is greater than the count (ZS) 0, and is released if the transmission counter (SZ) once again has the count (ZS) 0.

3. Method according to Claim 1 or 2,
**characterized**
**in that** a cell (Z) is formed by a cell header (ZK) and an information part (NT) and in that the cell start information and cell end information (za, ze) are inserted into the cell header (ZK).

4. Method according to one of Claims 1 to 3,
**characterized**
**in that** the cells (Z) of the information packet (pi) of the virtual connections are transmitted in statistically multiplexed form.

5. Arrangement for administering switching resources (VR) in communications systems (KS) which operate using the asynchronous transfer mode and have connected communications terminals (KE), in which virtual connections are set up under signalling or administration control, with the scope of the switching resources (VR) for the respective virtual connections being indicated to the relevant communications systems (KS),
**characterized**
**in that** an evaluation routine (AR) which evaluates the cell headers (ZK) and counters (SZ, PZ) which can be incremented and decremented, as well as control means (ZS) are provided in each of the connecting modules (AM) in the communications systems (KS) and are designed such that
• after each identification of cell start information or cell end information (za, ze), respectively, starting from a predetermined count (ZS), the count (ZS) of the packet counter (Z) is changed in one counting direction or, respectively, in an inverse counting direction,
• after each identification of cell start information (za) starting from a predetermined count (ZS), the count (ZS) of the transmission counter (SZ) is changed in one counting direction provided the indicated switching resources (VR) can be allocated for that particular transmission of the respective information packet (pi),
• after each identification of cell end information (ze), the count (ZS) of the associated transmission counter (SZ) is changed in the inverse counting direction, provided the counts (ZS) of the packet and transmission counters (PZ, SZ) match, and
- **in that** the scope of the switching resources (VR) which is indicated to the respective communications system (KS) for the respective virtual connection is allocated, provided the count (ZS) of the transmission counter (SZ) differs from its previous count (ZS) and is released if the transmission counter (SZ) once again has its predetermined count (ZS).

## Revendications

1. Procédé de gestion de ressources de commutation (VR) dans des systèmes de communication (KS) fonctionnant en mode de transfert asynchrone et connectés à des terminaux de communication (KE), dans lequel des liaisons virtuelles sont établies et commandées par signalisation ou administration, l'étendue desdites ressources de commutation (VR) pour lesdites liaisons virtuelles étant signalée aux systèmes de communication (KS) concernés, **caractérisé**
- **en ce que** dans chaque première resp. dernière cellule (Z) de chaque paquet d'informations (pi) à commuter par plusieurs cellules (Z) d'une liaison virtuelle est insérée une information de début de cellule resp. de fin de cellule (za, ze),
- **en ce que** chaque liaison virtuelle se voit attribuer temporairement un compteur de paquets (PZ) et un compteur d'émissions (SZ),
- **en ce que** dans les systèmes de communication (KS)
. après chaque identification d'une information de début de cellule resp. de fin de cellule (za, ze), en partant d'une position de compteur (ZS) prédéterminée, la position de compteur (ZS) du compteur de paquets (Z) est modifiée en un sens resp. en un sens inverse,
. après chaque identification d'une information de début de cellule (za), en partant d'une position de compteur (ZS) prédéterminée, la position de compteur (ZS) du compteur d'émissions (SZ) est modifiée en un sens quand les ressources de commutation (VR) signalées pour la commutation actuelle du paquet d'informations (pi) concerné peuvent être allouées,
. après chaque identification d'une information de fin de cellule (ze), la position de compteur (ZS) du compteur d'émissions (SZ) attribué est modifiée en sens inverse quand les positions de compteur (ZS) des compteurs de paquets et d'émissions (PZ, SZ) correspondent, et
- en ce que l'étendue des ressources de commutation (VR) signalée au système de communication (KS) concerné pour la liaison virtuelle concernée est allouée quand la position de compteur (ZS) du compteur d'émissions (SZ) est différente de la position de compteur (ZS) prédéterminée, et est validée quand le compteur d'émissions (SZ) présente à nouveau la position de compteur (ZS) prédéterminée.

2. Procédé selon la revendication 1, **caractérisé**
- **en ce que** dans les systèmes de communication (KS),
. après chaque identification d'une information de début de cellule resp. de fin de cellule (za, ze), en partant d'une position de compteur (ZS) prédéterminée 0, la position de compteur (ZS) du compteur de paquets (Z) est incrémentée resp. décrémentée,
. après chaque identification d'une information de début de cellule (za), en partant d'une position de compteur (ZS) prédéterminée 0, la position de compteur (ZS) du compteur d'émissions (SZ) est incrémentée quand les ressources de commutation (VR) signalées pour la commutation actuelle du paquet d'informations (pi) concerné peuvent être allouées,
. après chaque identification d'une information de fin de cellule (ze), la position de compteur (ZS) du compteur d'émissions (SZ) attribué est décrémentée quand les positions de compteur (ZS) des compteurs de paquet et d'émission (PZ, SZ) correspondent, et
- en ce que l'étendue des ressources de commutation (VR) signalée au système de communication (KS) concerné pour la liaison virtuelle concernée est allouée quand la position de compteur (ZS) du compteur d'émissions (SZ) est supérieure à la position de compteur (ZS) 0, et est validée quand le compteur d'émissions (SZ) présente à nouveau la position de compteur (ZS) 0.

3. Procédé selon la revendication 1 ou 2, **caractérisé en ce qu'**une cellule (Z) est constituée par un en-tête de cellule (ZK) et une partie d'informations (NT) et **en ce que** les informations de début de cellule et de fin de cellule (za, ze) sont insérées dans l'en-tête de cellule (ZK).

4. Procédé selon l'une des revendications 1 à 3, **caractérisé en ce que** les cellules (Z) des paquets d'informations (pi) des liaisons virtuelles sont transmises par multiplexage statistique.

5. Dispositif de gestion de ressources de commutation (VR) dans des systèmes de communication (KS) fonctionnant en mode de transfert asynchrone et connectés à des terminaux de communication (KE), dans lequel des liaisons virtuelles sont établies et commandées par signalisation et administration, l'étendue desdites ressources de commutation (VR) pour lesdites liaisons virtuelles étant signalée aux systèmes de communication (KS) concernés, **caractérisé**
- **en ce que** les modules de connexion (AM) des systèmes de communication (KS) comportent chacun une routine d'évaluation (AR) évaluant les en-têtes de cellule (ZK), des compteurs (SZ, PZ) pouvant être incrémentés et décrémentés ainsi que des moyens de commande (ZS), qui sont réalisés de telle sorte que
. après chaque identification d'une information de début de cellule resp. de fin de cellule (za, ze), en partant d'une position de compteur (ZS) prédéterminée, la position de compteur (ZS) du compteur de paquets (Z) est modifiée en un sens resp. en un sens inverse,
. après chaque identification d'une information de début de cellule (za), en partant d'une position de compteur (ZS) prédéterminée, la position de compteur (ZS) du compteur d'émissions (SZ) est modifiée en un sens quand les ressources de commutation (VR) signalées pour la commutation actuelle du paquet d'informations (pi) concerné peuvent être allouées,
. après chaque identification d'une information de fin de cellule (ze), la position de compteur (ZS) du compteur d'émissions (SZ) attribué est modifiée en sens inverse si les positions de compteur (ZS) des compteurs de paquets et d'émissions (PZ, SZ) correspondent, et
- en ce que l'étendue des ressources de commutation (VR) signalée au système de communication (KS) concerné pour la liaison virtuelle concernée est allouée quand la position de compteur (ZS) du compteur d'émissions (SZ) est différente de la position de compteur (ZS) prédéterminée, et est validée quand le compteur d'émissions (SZ) présente à nouveau la position de compteur (ZS) prédéterminée.
